(19) Europäisches Patentamt
European Patent Office
Office européen des brevets

(11) Veröffentlichungsnummer: **0 271 695**
**B1**

(12) # EUROPÄISCHE PATENTSCHRIFT

(45) Veröffentlichungstag der Patentschrift: **27.09.89**

(51) Int. Cl.⁴: **C07F 9/34**, C07F 9/42

(21) Anmeldenummer: **87116303.6**

(22) Anmeldetag: **05.11.87**

(54) **Verfahren zur Herstellung von Phosphin- oder Phosphonsäurechloriden.**

(30) Priorität: **26.11.86 DE 3640357**

(43) Veröffentlichungstag der Anmeldung: **22.06.88 Patentblatt 88/25**

(45) Bekanntmachung des Hinweises auf die Patenterteilung: **27.09.89 Patentblatt 89/39**

(84) Benannte Vertragsstaaten: **DE FR GB NL**

(56) Entgegenhaltungen:
**GB-A- 2 127 412**
**US-A- 3 461 189**

**SOVIET INVENTIONS ILLUSTRATED, Sektion Chemical, Woche 8413, Klasse C, 9. Mai 1984, Seite 2, Nr. 84-079969/13, Derwent Publications Ltd, London, GB; & SU-A-942 401 (AS USSR KAZAN ORG.) 07-10-1983**

(73) Patentinhaber: **HOECHST AKTIENGESELLSCHAFT, Postfach 80 03 20, D-6230 Frankfurt am Main 80(DE)**

(72) Erfinder: **Weferling, Norbert, Dr., Schaesbergstrasse 13, D-5030 Hürth(DE)**

**EP 0 271 695 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Phosphin- oder Phosphonsäurechloriden der allgemeinen Formeln

$R^1 - P(O)Cl_2$ (I),

$R^1R^2P(O)Cl$ (II),

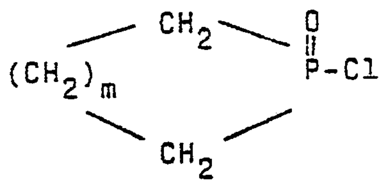

(III) oder

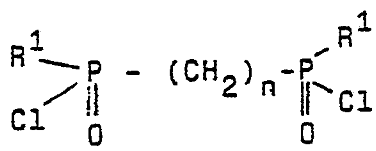

(IV),

wobei in den Formel
$R^1$ und $R^2$ die Bedeutung von geradkettigen oder verzweigten Alkylgruppen, substituierten oder unsubstituierten Aryl- oder Cycloalkylgruppen mit 1 bis 16 C-Atomen zukommt,
m = 2 oder 3,
n = eine ganze Zahl von 1 bis 6 ist und
in Formel III eines der H-Atome eine Methyl- oder Ethylgruppe sein kann.

Zur Herstellung von Phosphin- oder von Phosphonsäuredichloriden sind in Houben-Weyl "Methoden der Organischen Chemie", Georg Thieme Verlag, Stuttgart, New York 1982, Vol. E2, Seiten 150-165 sowie Seiten 326-333 bereits zahlreiche Wege beschrieben worden. Bekannt ist auch die Herstellung von Phosphinsäurechloriden durch Chlorierung von Phosphinoxiden mit Chlor in Gegenwart von Chlorwasserstoff (DE-A1 23 35 371) oder durch Umsetzung von Phosphinoxiden mit Hexachlorethan (DE-A1 32 35 787).

Ein Nachteil dieser bekannten Arbeitsweise ist, daß als Ausgangsprodukte Derivate von Phosphanen dienen, die in der Regel erst aus letzteren hergestellt werden müssen. Überraschenderweise wurde nun erstmals ein Weg gefunden, der, ausgehend von primären oder sekundären Phosphanen, den direkten Zugang zu den eingangs beschriebenen Phosphin- oder Phosphonsäurechloriden der allgemeinen Formeln I bis IV ermöglicht, indem man primäre oder sekundäre Phosphane der allgemeinen Formeln

$R^1HP-H$ (V),

$R^1R^2P-H$ (VI),

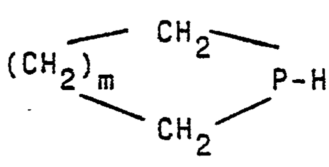

(VII) oder

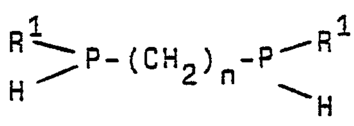

(VIII),

in denen $R^1$, $R^2$, m und n die oben angegebene Bedeutung haben und wobei in Formel VII eines der H-Atome der $CH_2$-Gruppen ein Methyl- oder Ethylgruppe sein kann, mit Sulfurylchlorid umsetzt.

Vorzugsweise Ausgestaltungen dieses Verfahrens sind,
daß man das Sulfurylchlorid mit den primären Phosphanen in einem Molverhältnis von mindestens 3:1 und mit den sekundären Phosphanen im Molverhältnis von mindestens 2:1 umsetzt;
daß man die Umsetzung bei Temperaturen zwischen -60°C und +90°C durchführt; und
daß man die Umsetzung in Gegenwart eines Lösemittels durchführt, wobei als Lösemittel Sulfurylchlorid im Überschuß oder übliche aliphatische oder aromatische Lösemittel, wie z.B. Kohlenwasserstoffe oder aprotische Lösemittel, eingesetzt werden.

Beispiel 1

Herstellung von Dimethylphosphinsäurechlorid

In einem 500 ml Mehrhalskolben mit Rührer, Rückflußkühler und Thermometer wurde eine Lösung von 295 g (2,2 Mol) $SO_2CL_2$ in 100 ml Hexan vorgelegt. Nach Abkühlung auf 0°C leitete man Dimethylphosphan so schnell ein, daß die Innentemperatur 10°C nicht überstieg. Innerhalb von 90 Min. wurden 62 g (1 Mol) eingeleitet. Anschließend erwärmte man die gelbe Reaktionsmischung auf Siedetemperatur (ca. 70°C), um restliche, gasförmige Reaktionsprodukte abzutreiben. Aus der klaren, nunmehr roten Lösung kristallisierte bei Abkühlung $(CH_3)_2P(O)Cl$ aus. Zur Reinigung wurden sämtliche Leichtsieder im Vakuum entfernt und der feste Rückstand in ca. 150 ml siedendem Hexan gelöst. Das in der Kälte auskristallisierte Produkt wurde über eine Umkehrfritte isoliert und getrocknet.
Ausbeute: 96 g (86 % d. Th.). Das Produkt war NMR-spektroskopisch sauber; $\delta$ P = 59,5 ppm (> 99 %); Literaturwert: 62,8 ppm.

Beispiel 2

Herstellung von sek.- Butylphosphonsäuredichlorid

Zu einer Lösung von 90 g (1 Mol) sek.-Butylphosphan in 90 g Toluol wurden innerhalb von 1 Stunde 440 g (3,3 Mol) Sulfurylchlorid getropft. Um die Reaktionstemperatur zwischen 20 und 30°C zu halten, war während des ersten Drittels der Dosierung eine Außenkühlung des Glaskolbens mit Methanol/Trockeneis-Kältemischung notwendig. Zur Nachreaktion wurde anschließend auf 60°C erwärmt und solange gerührt, bis keine Gasentwicklung mehr beobachtet wurde. Sämtliche Leichtsieder wurden im Vakuum bei Raumtemperatur abgezogen. Das Rohprodukt wurde destilliert.
Kp: 88-91°C, Ausbeute: 148 g (84 %)
$\delta P$ = 57,9 ppm (> 99 %).
In ähnlicher Weise, wie in den ersten zwei Beispielen beschrieben, wurden hergestellt (siehe Tabelle):
Beispiel 3: Di-n-butylphosphinsäurechlorid
4: n-Octylphosphonsäuredichlorid
5: Dicyclohexylphosphinsäurechlorid

Tabelle

| Beispiel | Phosphan g//Mol | $SO_2Cl_2$ g//Mol | Lösemittel | Reaktionstemperatur | Rektionszeit | Ausbeute g//% | $^{31}P$—NMR ppm |
|---|---|---|---|---|---|---|---|
| 3 | 146//1 | 281//2,1 | Hexan | 20–80°C | 2 h | 168//85<br>Kp 135°C/0,1 mbar | 70,7 |
| 4 | 87//0,68 | 286//2,1 | – | –10–+10°C | 2 h | 108//78<br>Kp 80°C/0,1 mbar | 49,1 |
| 5 | 198//1 | 297//2,2 | Toluol | 25–60°C | 4 h | 207//83 (aus Hexan) | 81,1 |

## Patentansprüche

1. Verfahren zur Herstellung von Phosphin- oder Phosphonsäurechloriden der allgemeinen Formeln

$R^1 - P(O)Cl_2$ (I),

$R^1R^2P(O)Cl$ (II),

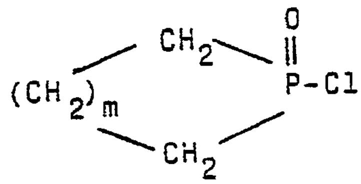
(III) oder

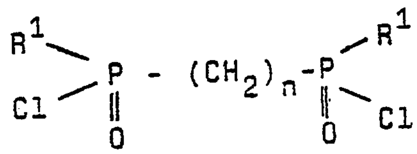
(IV),

wobei in den Formeln
$R^1$ und $R^2$ die Bedeutung von geradkettigen oder verzweigten Alkylgruppen, substituierten oder unsubstituierten Aryl- oder Cycloalkylgruppen mit 1 bis 16 C-Atomen zukommt,
m = 2 oder 3,
n = eine ganze Zahl von 1 bis 6 ist und
in Formel III eines der H-Atome eine Methyl- oder Ethylgruppe sein kann,
dadurch gekennzeichnet, daß man primäre oder sekundäre Phosphane der allgemeinen Formeln

$R^1HP-H$ (V),

$R^1R^2P-H$ (VI),

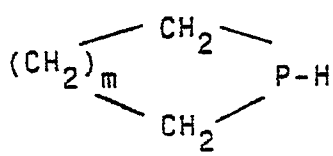
(VII) oder

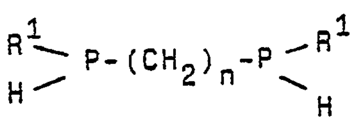
(VIII),

in denen $R^1$, $R^2$, m und n die oben angegebene Bedeutung haben und wobei in Formel VII eines der H-Atome der $CH_2$-Gruppen eine Methyl- oder Ethylgruppe sein kann, mit Sulfurylchlorid umsetzt.

2. Verfahren nach Anspruch 1, dadurch gekennzeichnet, daß man das Sulfurylchlorid mit den primären Phosphanen in einem Molverhältnis von mindestens 3 : 1 und mit den sekundären Phosphanen in einem Molverhältnis von mindestens 2 : 1 umsetzt.

3. Verfahren nach einem der Ansprüche 1 oder 2, dadurch gekennzeichnet, daß man die Umsetzung bei Temperaturen zwischen -60°C und +90°C durchführt.

4. Verfahren nach einem der Ansprüche 1 - 3, dadurch gekennzeichnet, daß man die Umsetzung in Gegenwart eines Lösemittels durchführt.

5. Verfahren nach Anspruch 4, dadurch gekennzeichnet, daß man als Lösemittel Sulfurylchlorid im Überschuß oder übliche aliphatische oder aromatische Lösemittel einsetzt.

**Claims**

1. A process for the preparation of a chlorophosphinic or chlorophosphonic acid of the general formula

$$R^1 - P(O)Cl_2 \qquad (I),$$

$$R^1R^2P(O)Cl \qquad (II),$$

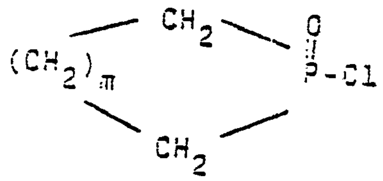

(III) or

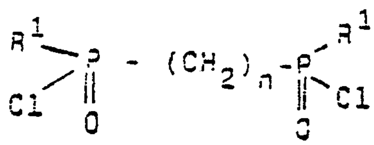

(IV),

where, in the formulae,
$R^1$ and $R^2$ denote straight-chain or branched alkyl groups or substituted or unsubstituted aryl or cycloalkyl groups having 1 to 16 carbon atoms,
m = 2 or 3,
n = an integer from 1 to 6, and
in the formula III, one of the H atoms may be a methyl or ethyl group,
which comprises reacting a primary or secondary phosphine ot the general formula

$$R^1HP-H \qquad (V),$$

$$R^1R^2P-H \qquad (VI),$$

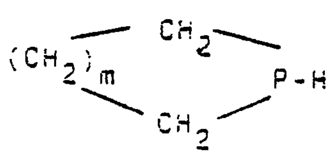

(VII) or

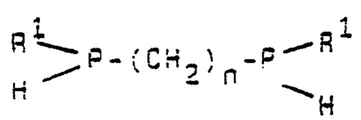

(VIII),

in which $R^1$, $R^2$, m and n have the abovementioned meaning and where, in the formula VII, one of the H atoms of the $CH_2$ groups may be a methyl or ethyl group, with sulfuryl chloride.

2. The process as claimed in claim 1, wherein sulfuryl chloride is reacted with the primary phosphine in a molar ratio of at least 3:1 and with the secondary phosphine in a molar ratio of at least 2:1.

3. The process as claimed in one of claims 1 or 2, wherein the reaction is carried out at a temperature between –60°C and +90°C.

4. The process as claimed in one of claims 1–3, wherein the reaction is carried out in the presence of a solvent.

5. The process as claimed in claim 4, wherein the solvent employed is sulfuryl chloride in excess or a customary aliphatic or aromatic solvent.

## Revendications

1. Procédé pour la fabrication de chlorures d'acides phosphiniques ou phosphoniques de formules générales:

$$R^1 - P(O)Cl_2 \qquad (I),$$

$$R^1R^2P(O)Cl \qquad (II),$$

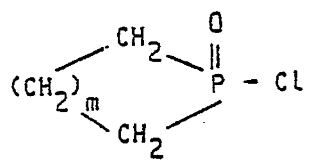 (III) ou

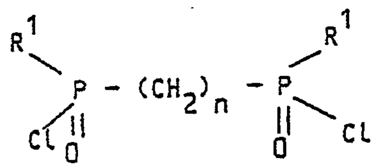 (IV),

dans lesquelles
$R^1$ et $R^2$ représentent des groupes alkyles à chaînes droites ou ramifiées ou des groupes aryles ou cycloalkyles substitués ou non, en $C_1$–$C_{16}$,
m est égal à 2 ou 3,
n est un nombre entier de 1 à 6 et
dans la formule III, l'un des atomes d'hydrogène peut être remplacé par un groupe méthyle ou éthyle, caractérisé en ce que l'on fait réagir des phosphines primaires ou secondaires de formules générales

$$R^1HP - H \qquad (V),$$

$$R^1R^2P - H \qquad (VI),$$

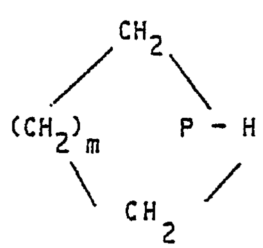 (VII) ou

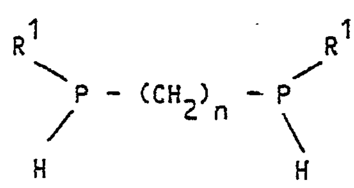 (VIII),

dans lesquelles $R^1$, $R^2$, m et n ont la signification indiquée ci-dessus et dans la formule VII l'un des atomes d'hydrogène des groupes $CH_2$ peut être remplacé par un groupe méthyle ou éthyle, avec le chlorure de sulfuryle.

2. Procédé selon la revendication 1, caractérisé en ce que l'on fait réagir le chlorure de sulfuryle avec les phosphines primaires dans un rapport molaire d'au moins 3:1 et avec les phosphines secondaires dans un rapport molaire d'au moins 2:1.

3. Procédé selon la revendication 1 ou 2, caractérisé en ce que l'on met en œuvre la réaction à des températures comprises entre –60° et +90°C.

4. Procédé selon l'une des revendications 1–3, caractérisé en ce que l'on met en œuvre la réaction en présence d'un solvant.

5. Procédé selon la revendication 4, caractérisé en ce que l'on utilise comme solvant le chlorure de sulfuryle en excès ou un solvant aliphatique ou aromatique habituel.